# EUROPEAN PATENT SPECIFICATION

(11) **EP 1 551 674 B1**
(45) Date of publication and mention of the grant of the patent: **01.02.2012**
(21) Application number: 03797758.4
(22) Date of filing: 04.06.2003
(51) Int. Cl.: B60R 21/232

(54) **AN AIR-BAG**
AIRBAG
AIRBAG

(30) Priority: 20.09.2002 GB 0221921
(43) Date of publication of application: 13.07.2005
(73) Proprietor: AUTOLIV DEVELOPMENT AB, 447 83 Vargarda (SE)
(72) Inventor: KRUSE, Dion, S-441 33 Alingsas (SE)
(74) Representative: Barton, Matthew Thomas
(86) International application number: PCT/SE2003/000908
(87) International publication number: WO 2004/026640

(56) References cited:
- US-A1- 2002 014 762
- US-A1- 2002 036 394
- US-A1- 2002 105 173
- US-A1- 2002 125 693
- US-A1- 2002 163 167
- US-A1- 2002 175 502
- US-A1- 2002 195 804
- US-B1- 6 203 058
- US-B1- 6 227 561
- US-B1- 6 231 073
- US-B1- 6 299 199
- US-B1- 6 336 654
- US-B1- 6 409 211
- US-B1- 6 428 037
- US-B1- 6 431 587
- US-B1- 6 457 740
- US-B1- 6 464 250

## Description

**THE PRESENT INVENTION** relates to an air-bag, and more particularly relates to an air-bag in the form of an inflatable curtain.

It has been proposed previously to provide an air-bag safety device for a motor vehicle, the safety device being in the form of an inflatable curtain which, when inflated, extends from the roof-line of the vehicle adjacent the side windows of the vehicle to provide protection for an occupant of the vehicle during a side impact or roll-over situation.

US 6,203,058 describes an air-bag according to the preamble of claim 1.

Many different designs of inflatable curtain have been proposed in recent years.

Some prior proposed inflatable curtains extend to cover only the top part of the side windows, primarily to prevent the head of a vehicle occupant from being displaced to such an extent that the head of the occupant is on the outside of the vehicle during a side impact or roll-over situation. However, it has been found that in some situations the limbs of a vehicle occupant, such as the arms of the occupant, may extend through the side windows during a roll-over situation, with such an inflatable curtain arrangement.

The present invention seeks to provide an improved air-bag in the form of an inflatable curtain.

According to the present invention, there is provided an air-bag according to claim 1.

Preferably when inflated, the degree of overlap of the said lower edge of the inflatable element, and the part of the vehicle beneath the lower-most edge of the or each window opening is between 40 and 100 millimetres.

Advantageously the degree of overlap is between 50 and 60 millimetres.

Advantageously a tensioning unit is provided at one of said anchoring points.

Conveniently the said part of the air-bag is a strap extending from an inflatable region of the air-bag to the tensioning unit.

In order that the invention may be more readily understood, and so that further features thereof may be appreciated, the invention will now be described, by way of example, with reference to the accompanying drawings in which:
FIGURE 1 is a diagrammatic view of a first embodiment of an air-bag in accordance with the invention when in the inflated condition, and
FIGURE 2 is a corresponding view illustrating an alternative form of air-bag not being part of the invention.

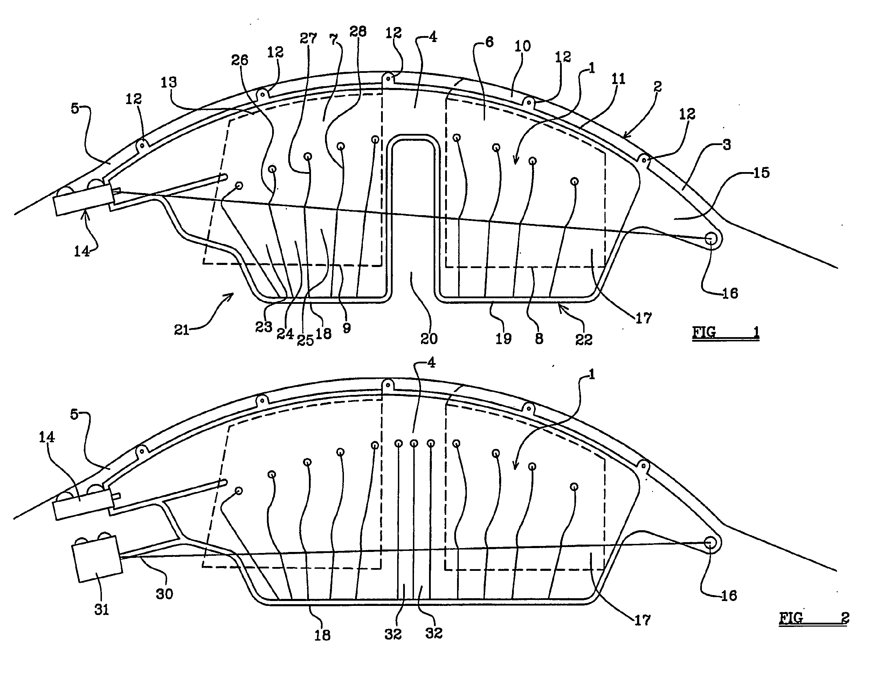

Referring initially to Figure 1, an air-bag 1 in the form of an inflatable curtain is illustrated. The air-bag 1 is illustrated mounted within a motor vehicle 2. The motor vehicle 2 is provided with a structural "A"-Post 3 extending towards the front of the vehicle, a structural "B"-Post 4 located in the centre of the vehicle between the front and rear side windows, and a structural "C"-Post 5 located towards the rear of the vehicle. Two side windows 6, 7 are mounted in the vehicle, the front window 6 having a lower edge 8, and the rear window 7 having a lower edge 9. The lower edges 8, 9 of the windows 6, 7 are co-aligned and, in the illustrated embodiment, are substantially horizontal.

The vehicle 2 has a roof-line 10 which extends from the "A"-Post 3 at the front of the vehicle, across the top of the "B"-Post 4 to the "C"-Post 5 at the rear of the vehicle.

The inflatable curtain 1 is formed from two superimposed layers of fabric which are secured together around their co-aligned outer edges, and which are also secured together in other regions to define, as will become clear from the following description, a plurality of discrete inflatable chambers.

The inflatable curtain 1 has an upper edge 11 provided with mounting lugs 12, the upper edge 11 being configured so that the mounting lugs 12 may be connected to mounting brackets provided in the roof-line 10 of the vehicle. An open gas-flow path 13 is defined within the inflatable curtain 1 adjacent the upper edge 11. Optionally a gas supply duct may be provided within this gas-flow path 13, but no separate gas supply duct is illustrated in this embodiment.

A gas generator 14 is provided which is mounted on the "C"-Post 5 of the vehicle 2 and is positioned to inject gas into the gas-flow path 13 of the inflatable curtain 1. The gas generator 14 is securely mounted in position and constitutes an anchoring point that is located at one end of a virtual line of tension that exists when the inflatable curtain has been inflated.

At the forward end of the motor vehicle the inflatable curtain 1 is provided with a forwardly extending lug 15 provided with a terminal anchoring point 16 which connects the lug 15 to the "A"-Post 3. The anchoring point 16 constitutes an anchoring point at the other end of the said virtual line of tension.

The line of tension is shown as line 17. This is purely a "notional" line, and would not in any way be visible in reality.

The inflatable curtain 1 has a lower edge constituted by two-edge regions 18, 19 which are separated from one another by a re-entrant slot 20 which extends upwardly from the lower edge in the region of the "B"-Post 4 to accommodate a "B"-Post mounted safety-belt (not shown). The two lower-edge regions 18, 19 are each located at a position beneath the lower-most edges 8, 9 of the windows 6, 7 of the motor vehicle 2. The distance between the lower edge regions 18, 19 of the inflatable curtain and the lower-most edges of the adjacent windows should be between 40 and 100 millimetres, and most preferably between 50 and 60 millimetres.

The re-entrant slot 20 in the region of the "B"-Post 4 effectively divides the inflatable curtain 1 into two inflatable areas 21, 22, with each area being divided into a plurality of separate inflatable cells, such as the cells 23, 24, 25, by means of separating seams, such as the seams 26, 27, 28. In the illustrated embodiment the seams which define the inflatable cells, such as the seams 26, 27, 28, extend to the lower edge regions 18, 19 of the inflatable curtain so that the cells are effectively "sealed" at their lower-most ends. However, in an alternative embodiment of the invention the seams, such as the seams 26, 27, 28, which define the cells may terminate at a point above the lower edge regions 18, 19 of the inflatable curtain 1, so that there is internal venting between adjacent cells.

It is to be observed that the nature of the separating seams is such that, at least below the line of tension 17, the axis of each cell 23, 24, 25 is substantially perpendicular to the line of tension 17.

It is to be appreciated that before deployment, the inflatable curtain 1 is folded and stored within a housing or channel formed in the roof-line 10 of the vehicle 2, so that the inflatable curtain may be inconspicuous. On deployment of the inflatable curtain, in response to a signal from an appropriate sensor, gas will be generated by the gas generator 14 and will flow through the gas-flow path 13 to inflate the discrete inflatable cells, such as the cells 23, 24, 25 in each of the inflatable areas 21, 22 of the inflatable curtain 1. As the cells inflate, so the effective width of the inflatable element in the region extending between the anchoring point securing the gas generator 14 in position, and the anchoring point 16 securing the forwardly extending lug 15 in position will reduce, thus creating the line of tension 17.

Because a substantial proportion of the lower-most edges 18, 19 of the inflatable element extends beneath the lower-most edges 8, 9 of the adjacent window openings, the windows 6, 7 are completely, or at least substantially covered by the inflatable curtain 1, thus minimising the risk of any part of an occupant being ejected through the window during an accident situation. It has been found that the minimum tractable extent of "overlap" of the inflatable curtain, and the part of the vehicle below the lower-most edge of the side window should be approximately 40 millimetres, to provide an appropriate degree of support. A degree of overlap of greater than 100 millimetres may prove to be undesirable, as the inflatable curtain has to be inflated swiftly if it is to provide the desired protective effect, especially in a side impact situation, and any increase in overlap increases the volume of the cells in the inflatable areas, meaning that more gas must be provided to inflate the inflatable curtain, thereby slowing the time to reach full deployment.

The re-entrant slot 20 is provided so that the inflatable curtain may deploy in the desired manner in a motor vehicle in which safety-belts are provided which are mounted on the "B"-Posts at either side of the vehicle. The re-entrant slot 20 does not substantially reduce the effect of the notional line of tension 17. Each of the inflatable areas 21, 22, because of the presence of the discrete cells, will have a certain degree of rigidity when inflated. With each inflatable area 21, 22 having its upper-most edge secured to the roof of the vehicle, and having its lower edge overlapping with the part of the vehicle beneath the adjacent side window, with at least one side edge being secured in position by the anchoring point at the appropriate end of the notional line of tension, the described parts of the inflatable curtain will remain in their intended position during a typical side impact or roll-over situation, providing the desired degree of protection for a vehicle occupant.

It is to be noted that the cells, as exemplified by the cells 23, 24, 25, may have a more "stylistic" or contoured configuration at points above the notional line of tension 17.

It is preferred that the extent of the lower edge of the inflatable curtain, which is overlapped beneath the lower edge of the adjacent window should be at least two-thirds of the total lower edge of the inflatable curtain.

Figure 2 illustrates a modified embodiment in which like reference numerals are used to indicate like parts. However, this embodiment which is not part of of the invention is intended for use in a motor vehicle where instead of the safety-belt being mounted on the "B"-Post of the vehicle, the safety-belt is totally integrated within the seat of the vehicle. Consequently, in this embodiment there is no re-entrant slot equivalent to the slot 20 of the embodiment illustrated in Figure 1,because no access is required to the "B"-Post through the inflatable curtain. Thus the lower edge of the inflatable element 10 is a single integral lower edge 18. Although the gas generator 14 is secured to the "C"-Post 5, as in the proceeding embodiment, in the embodiment of Figure 2 at a point beneath the gas generator 14, the inflatable curtain 1 is provided with an extending strap 30 which is connected to a tensioning unit 31. The tensioning unit 31 is configured to apply tension to the strap 30 as the inflatable curtain is inflating, thus establishing a substantially horizontal line of tension extending between the tensioning unit 31 and the anchoring point 16. The remaining features of the embodiment of Figure 2 correspond directly with the corresponding features of the embodiment of Figure 1 as described above, save that, in the illustrated embodiment, cells 32, 33 are provided which are co-aligned with the "B"-Post 4 of the vehicle, those cells having a volume which is much smaller than the volume of the remaining cells present in the inflatable curtain. Thus the cells only require a minimum amount of gas to become inflated, but still serve to provide protection in the region of the "B"-Post. Thus the cells may provide some protection should the head of an occupant of the vehicle move in such a way that the head may strike the "B"-Post 4 of the vehicle.

Whilst the described embodiment of the invention comprises an inflatable curtains formed primarily from two adjacent layers of fabric, it is to be understood that in alternative embodiments of the invention, three or more layers of fabric may be provided to improve the degree of support provided by the inflatable curtain when the inflatable curtain is inflated. If three or more layers of fabric are utilised, the three layers will be super-imposed with one set of cells being defined between the central layer of fabric and one outer layer of fabric, and a second set of cells, off-set from the first set, being defined between the central layer of fabric and the other outer layer of fabric.

In the present Specification "comprises" means "includes or consists of" and "comprising" means "including or consisting of".

## Claims

1. An air-bag (1) mounted in a motor vehicle (2), the motor vehicle having at least one window opening (6, 7) with a lower edge (8, 9), the air-bag being mounted in position above the said at least one window opening and being configured so that, when inflated, at least two-thirds of the lower-most edge (18, 19) of the air-bag extend beneath the lower-most edge of the or each adjacent window, whereby a forward part of the air-bag is secured to the vehicle at a first anchoring point (15, 16) and a rear part of the air-bag is secured to the vehicle at a second anchoring point (14, 31), **characterised in that** the air-bag is formed from two superimposed layers of fabric which are secured together around their co-aligned outer edges and secured together in other regions, thereby defining a plurality of discrete inflatable cells (23-25), wherein the airbag is provided with a re-entrant slot (20) in the lower edge (18,19) thereof, the slot (20) being substantially in alignment with one structural post of the vehicle **in that** the inflatable cells each have a longitudinal axis and are configured so that a virtual line of tension is created between the anchoring points (14, 31, 15, 16) when the air-bag is inflated, the longitudinal axis of each cell being substantially perpendicular to said line of tension, at least beneath the line of tension, when the air-bag is inflated, and **in that** the discrete inflatable cells (23, 24, 25) are separated by separating seams (26, 27, 28) which extend to the lower edge (18,19) of the airbag so that the cells (23, 24, 25) are sealed at their lower-most ends.

2. An air-bag according to Claim 1 wherein, when inflated, the degree of overlap of the said lower edge (18,19) of the inflatable element, and the part of the vehicle beneath the lower-most edge (8,9) of the or each window opening is between 40 and 100 millimetres.

3. An air-bag according to Claim 2 wherein the degree of overlap is between 50 and 60 millimetres.

4. An air-bag according to Claim 1 wherein a tensioning unit (31) is provided at one of said anchoring points to apply tension to part of the air-bag.

5. An air-bag according to Claim 4 wherein the said part of the air-bag is a strap (30) extending from an inflatable region of the air-bag to the tensioning unit (31).

## Patentansprüche

1. Airbag (1), der in einem Kraftfahrzeug (2) eingebaut ist, wobei das Kraftfahrzeug zumindest eine Fensteröffnung (6, 7) mit einem unteren Rand (8, 9) aufweist, wobei der Airbag in Position über der zumindest einen Fensteröffnung angebracht und so konfiguriert ist, dass, wenn er aufgeblasen wird, sich zumindest zwei Drittel des untersten Rands (18, 19) des Airbags unterhalb des untersten Rands des oder jedes benachbarten Fensters erstrecken, wodurch ein vorderer Teil des Airbags am Fahrzeug an einem ersten Verankerungspunkt (15, 16) gesichert ist und ein hinterer Teil des Airbags am Fahrzeug an einem zweiten Verankerungspunkt (14, 31) gesichert ist, **dadurch gekennzeichnet, dass** der Airbag aus zwei übereinander gelegten Textilschichten ausgebildet ist, die zusammen rund um ihre mitausgerichteten Außenränder gesichert und zusammen in anderen Bereichen gesichert sind, wodurch mehrere einzelne aufblasbare Zellen (23-25) begrenzt sind, wobei der Airbag mit einem tiefer liegenden Schlitz (20) in seinem unteren Rand (18, 19) versehen ist, wobei sich der Schlitz (20) im Wesentlichen mit einer Struktursäule des Fahrzeugs in Ausrichtung befindet, so dass die aufblasbaren Zellen jeweils eine Längsachse aufweisen und so konfiguriert sind, dass eine virtuelle Spannungslinie zwischen den Verankerungspunkten (14, 31, 15, 16) entsteht, wenn der Airbag aufgeblasen wird, wobei die Längsachse jeder Zelle im Wesentlichen senkrecht zu dieser Spannungslinie, zumindest unter der Spannungslinie ist, wenn der Airbag aufgeblasen wird, und die einzelnen aufblasbaren Zellen (23, 24, 25) durch Trennnähte (26, 27, 28) getrennt sind, die zum unteren Rand (18, 19) des Airbags verlaufen, so dass die Zellen (23, 24, 25) an ihren untersten Enden abgedichtet sind.

2. Airbag nach Anspruch 1, wobei, wenn er aufgeblasen ist, der Grad der Überlappung des unteren Rands (18, 19) des aufblasbaren Elements und des Teils des Fahrzeugs unterhalb des untersten Rands (8, 9) der oder jeder Fensteröffnung zwischen 40 und 100 Millimeter beträgt.

3. Airbag nach Anspruch 2, wobei der Grad der Überlappung zwischen 50 und 60 Millimeter beträgt.

4. Airbag nach Anspruch 1, wobei eine Spannungseinheit (31) an einem der Verankerungspunkte vorgesehen ist, um auf einen Teil des Airbags Spannung auszuüben.

5. Airbag nach Anspruch 4, wobei der Teil des Airbags ein Gurt (30) ist, der sich von einem aufblasbaren Bereich des Airbags zur Spannungseinheit (31) erstreckt.

## Revendications

1. Un airbag (1) monté dans un véhicule automobile (2), le véhicule automobile ayant au moins une ouverture de fenêtre (6, 7) avec un bord inférieur (8, 9), l'airbag étant monté au-dessus de la ou des ouvertures de fenêtre et étant configuré de manière à ce que, une fois gonflé, au moins les deux tiers du bord le plus inférieur (18, 19) de l'airbag se trouvent au-dessous du bord le plus inférieur de la ou de chaque fenêtre adjacente, une partie avant de l'airbag étant fixée au véhicule à un premier point d'ancrage (15, 16) et une partie arrière de l'airbag étant fixée au véhicule à un deuxième point d'ancrage (14, 31), **se caractérisant par le fait que** l'airbag est formé de deux couches de tissu superposées fixées ensemble sur leurs bords extérieurs coalignés et fixées ensemble à d'autres endroits, ce qui définit plusieurs cellules gonflables différentes (23-25), l'airbag étant muni d'une fente rentrante (20) sur le bord inférieur (18,19), la fente (20) se trouvant sensiblement dans l'alignement d'un montant structurel du véhicule, les cellules gonflables ayant chacune un axe longitudinal et étant configurées de manière telle qu'une ligne de tension virtuelle est créée entre les points d'ancrage (14, 31, 15, 16) lorsque l'airbag est gonflé, l'axe longitudinal de chaque cellule étant sensiblement perpendiculaire à ladite ligne de tension, au moins au-dessous de la ligne de tension, lorsque l'airbag est gonflé, et les différentes cellules gonflables (23, 24, 25) étant séparées par des coutures de séparation (26, 27, 28) allant jusqu'au bord inférieur (18,19) de l'airbag pour que les cellules (23, 24, 25) soient jointes à leurs extrémités les plus basses.

2. Un airbag selon la revendication 1, dans lequel, une fois l'airbag gonflé, le degré de chevauchement dudit bord inférieur (18, 19) de l'élément gonflable et la partie du véhicule se trouvant au-dessous du bord le plus inférieur (8, 9) de la ou des ouvertures de fenêtre mesure entre 40 et 100 millimètres.

3. Un airbag selon la revendication 2, dans lequel le degré de chevauchement mesure entre 50 et 60 millimètres.

4. Un airbag selon la revendication 1, dans lequel un dispositif de tension (31) se trouve à un des points d'ancrage pour appliquer la tension à une partie de l'airbag.

5. Un airbag selon la revendication 4, dans lequel ladite partie de l'airbag est une sangle (30) allant d'une région gonflable de l'airbag au dispositif de tension (31).
